# EUROPEAN PATENT SPECIFICATION

(11) **EP 3 586 402 B1**
(45) Date of publication and mention of the grant of the patent: **28.12.2022**
(21) Application number: 17713291.7
(22) Date of filing: 24.03.2017
(51) Int. Cl.: H01Q 9/30, H01Q 9/40, H01Q 13/10, H01Q 13/18, H01Q 21/28, H01Q 21/30

(54) **MIMO ANTENNA MODULE**
MIMO-ANTENNENMODUL
MODULE D'ANTENNE MIMO

(43) Date of publication of application: 01.01.2020
(73) Proprietor: Huawei Technologies Co., Ltd., Longgang District Shenzhen, Guangdong 518129 (CN)
(72) Inventor: KHRIPKOV, Alexander, 164 40 Kista (SE); MILOSAVLJEVIC, Zlatoljub, 164 40 Kista (SE)
(74) Representative: Goddar, Heinz J.
(86) International application number: PCT/EP2017/057045
(87) International publication number: WO 2018/171891

(56) References cited:
- US-A1- 2010 013 732
- US-A1- 2014 071 005
- US-A1- 2014 266 923
- US-A1- 2015 200 448
- US-A1- 2015 263 430

## Description

### TECHNICAL FIELD

The aspects of the present disclosure relate generally to antenna systems and more particularly to a multiple input-multiple output (MIMO) antenna module.

### BACKGROUND

Antenna systems for next generation vehicular connectivity systems must meet certain demands and adhere to related standards. For mobile communications, the antennas must support 3GPP release 14 (LTE Advanced Pro) and meet all requirements regarding frequency ranges (698 MHz - 6 GHz and or 400 MHz - 6 GHz), MIMO capability (e.g. 4 × 4 MIMO) and carrier aggregations. In current vehicle antenna systems, MIMO capability, such as 4 × 4 MIMO, is typically achieved by two independent shark fin antennas that are placed at a distance from one another. However, there is no single antenna module that supports 4 × 4 MIMO.

The shark fin type antennas in typical vehicle connectivity systems do not support frequency ranges of 698 megahertz (MHz)-6 (gigahertz) GHz and/or 400 MHz - 6 GHz. Separate antennas are typically required to provide MIMO capability, carrier-aggregation or support Wi-Fi functionality, such as in-vehicle Wi-Fi hotspots.

Accordingly, it would be desirable to be able to provide an antenna system that addresses at least some of the problems identified above.

US 2014/071005 A1 discloses a mobile device that includes a metal body element, a feeding element, and a second antenna. The metal body element is substantially a planar structure and has a slot, wherein a first antenna is formed by the slot of the metal body element. The feeding element extends across the slot of the metal body element and is coupled to a first signal source. The second antenna is substantially located inside the slot of the metal body element and is coupled to a second signal source. The slot is used as a portion of a resonant structure of the second antenna in order to reduce a total size of the first antenna and the second antenna.

US 2014/071005 A1 discloses a mobile device including a metal body element, a feeding element, and a second antenna. The metal body element is substantially a planar structure and has a slot, wherein a first antenna is formed by the slot of the metal body element. The feeding element extends across the slot of the metal body element, and is coupled to a first signal source. The second antenna is substantially located inside the slot of the metal body element, and is coupled to a second signal source. The slot is used as a portion of a resonant structure of the second antenna in order to reduce a total size of the first antenna and the second antenna.

US 2015/200448 A1 discloses a mobile device that includes a ground plane, a grounding branch, a connection element, a first radiation branch, and a second radiation branch. The grounding branch is coupled to the ground plane. A first open slot is formed and substantially surrounded by the grounding branch and the ground plane, The first radiation branch is coupled through the connection element to the grounding branch. A second open slot is formed and is substantially surrounded by the first radiation branch and the grounding branch. The second radiation branch is disposed in the second open slot and is coupled to the grounding branch. A multi-band antenna structure is formed by the grounding branch, the connection element, the first radiation branch, and the second radiation branch.

US 2014/266923 A1 discloses an electronic devices that includes radio-frequency transceiver circuitry and antenna structures. The antenna structures may form a dual arm inverted-F antenna and a monopole antenna sharing a common antenna ground. The antenna structures may have three ports. A first antenna port may be coupled to an inverted-F antenna resonating element at a first location and a second antenna port may be coupled to the inverted-F antenna resonating element at a second location. A third antenna port may be coupled to the monopole antenna. Tuneable circuitry can be used to tune the antenna structures. An adjustable capacitor may be coupled to the first port to tune the inverted-F antenna. An additional adjustable capacitor may be coupled to the third port to tune the monopole antenna. Transceiver circuitry for supporting wireless local area network communications, satellite navigation system communications, and cellular communications may be coupled to the first, second, and third antenna ports.

US 2015/263430 A1 discloses an antenna structure that includes a ground plane and a grounding extension branch. The ground plane has a slot. The grounding extension branch is disposed in the slot, and is coupled to the ground plane. The ground plane and the slot are excited by a signal source to generate a low-frequency band. The grounding extension branch is excited by the signal source to generate a high-frequency band.

US 2010/013732 A1 discloses an antenna that includes a dielectric carrier having a bounding surface, and a conductive monopole resonant at a first frequency, the monopole having at least one conducting section mounted on the bounding surface. The antenna further includes a labyrinthine conductive coupling element mounted on the bounding surface so as to encompass the dielectric carrier. The coupling element is located with respect to the conductive monopole so as to transfer from the conductive monopole a second frequency lower than the first frequency.

CN 101697380 A discloses a dual polarized rectangular slot antenna for MIMO operation with a single feeding probe used to excite both polarizations by exploiting the orthogonality of odd and even modes of a coplanar waveguide.

### SUMMARY

It is an object of the invention to provide a MIMO antenna system. This object is solved by the subject matter of the independent claims. Further advantageous modifications can be found in the dependent claims.

According to a first aspect the above and further objects and advantages are obtained by a MIMO antenna assembly for an antenna module. The antenna assembly includes a planar dielectric member and at least one MIMO antenna formed on a surface of the planar dielectric member. The at least one MIMO antenna comprises a slot antenna and a monopole antenna. The slot antenna is formed as a first conductive pattern on a surface of the planar dielectric member. The monopole antenna is formed as a second conductive pattern on the surface of the planar dielectric member and is disposed in a slot portion of the slot antenna. The MIMO antenna assembly of the disclosed embodiments provides a monopole antenna with a slot antenna without occupying additional space, with at least -15 dB isolation between the antennas. The antenna assembly provides system capability in different frequency bands.

In a possible implementation form of the antenna assembly according to the first aspect, the slot antenna comprises a conductive perimeter member. The conductive perimeter member forms a ground for the monopole antenna. This allows the monopole antenna to be formed within the slot antenna without the need for additional space.

In a further possible implementation form of the antenna assembly according to the first aspect as such or the preceding possible implementation form of the first aspect, the antenna assembly is configured such that surface currents of the slot antenna in a slot mode are substantially orthogonal to surface currents of the monopole antenna in a monopole mode of the monopole antenna. The aspects of the disclosed embodiments provide for the slot antenna and the monopole antenna to operate within the same frequency bands, while providing for greater than -15 dB isolation between the antennas.

According to the first aspect, a shape of the slot portion of the slot antenna is tapered. Tapering provides wide band impedance matching.

In a further possible implementation form of the antenna assembly according to the first aspect as such or according to any one of the preceding possible implementation forms, a shape of the monopole antenna is tapered. Tapering provides wide band impedance matching for the monopole antenna.

In a further possible implementation form of antenna assembly according to the first aspect as such or according to any one of the preceding possible implementation forms, the monopole antenna is configured to be substantially planar with the planar dielectric member. The flat profile of the antenna assembly provides aesthetically pleasing qualities and lower wind noise.

In a further possible implementation form of the antenna assembly according to the first aspect as such or according to any one of the preceding possible implementation forms the slot antenna further comprises at least one feedline. The at least one feedline is configured to resonate the slot antenna at multiple frequency bands. This provides additional system capability in different frequency bands.

In a further possible implementation form of the antenna assembly according to the first aspect as such or according to any one of the preceding possible implementation forms the antenna assembly comprises at least one other MIMO antenna formed on the surface of the planar dielectric member, the at least one other MIMO antenna including a slot antenna and a monopole antenna. The slot antenna is formed as a third conductive pattern on a surface of the planar dielectric member. The monopole antenna is formed as a fourth conductive pattern on the surface of the planar dielectric member and is disposed in a slot portion of the slot antenna. The antenna module of the disclosed embodiments can provide at least a 4 × 4 MIMO antenna structure within a limited profile.

In an further possible implementation form of the antenna assembly according to the preceding possible implementation form a separation element is disposed between the at least one MIMO antenna and the at least one other MIMO antenna, the separation element comprising an additional antenna module configured for operation on frequency bands different from the at least one MIMO antenna and the at least one other MIMO antenna. The separation element provides further isolation between the MIMO antennas, while providing additional system capability in different frequency bands.

In a further possible implementation form of the antenna assembly according to the first aspect as such or to any one of the preceding possible implementation forms, the antenna assembly includes at least one additional monopole antenna, the at least one additional monopole antenna being formed as at least one conductive pattern on the surface of the planar dielectric member and being disposed substantially perpendicularly to the planar dielectric member. The additional monopole antenna provides additional system capability in different frequency bands. The volume of the additional MIMO antenna is maximized within the limited dimensions of the antenna assembly and provides system capability at the lowest additional frequency bands. Disposition of the additional monopole antenna substantially perpendicularly provides isolation of the additional monopole antenna to other planar systems.

According to a second aspect, the above and further objects and advantages are obtained by an antenna module. The antenna module includes any antenna assembly according to any one of the preceding possible implementations forms, wherein the antenna module further includes an enclosure defining a cavity, the enclosure comprising a top member and side members, the top member and the side members comprising a dielectric material, the enclosure further comprising a first end member, a second end member and a bottom member, the first end member, the second end member and bottom member comprising a conductive surface; and wherein the antenna assembly is located in the cavity. The aspects of the disclosed embodiments provide a MIMO antenna module that is conformal to a vehicle surface.

In a possible implementation form of the antenna module according to the second aspect as such the conductive first end member, the conductive second end member and the conductive bottom member are configured to form at least one additional MIMO antenna according to any one of the preceding possible implementation forms according to the first aspect. The antenna module supports simultaneous multiband operation of at least two antennas covering each frequency band.

According to a third aspect, the above and further objects and advantages are obtained by a vehicle that includes an antenna module according to any one of the first and second possible implementation forms according to the second aspect as such, wherein a conductive surface member of the vehicle is configured to be electrically connected to the slot antenna according to any one of the preceding possible implementation forms of the first aspect as such. The metallic vehicle surface is part of the slot antennas and enables a high efficiency, very wide band low-frequency main and MIMO antenna.

In a possible implementation form of the vehicle according to the third aspect as such, the top member of the antenna module is substantially conformal with the conductive surface member of the vehicle. This enables a visually appealing design and reduces air flow noise.

In a further possible implementation form of the vehicle method according to the preceding possible implementation form and the third aspect as such, a feedline for a slot antenna of the at least one additional MIMO antenna according to the first possible implementation form of the antenna module according to the second aspect as such is configured to be substantially perpendicular to the conductive surface member of the vehicle. The volume of the additional MIMO antenna is maximized given the limited dimensions of the outline of the antenna and the additional antenna provides additional system capability at the lowest additional frequency bands, such as approximately 452. 5 MHZ to 467.7 MHz.

These and other aspects, implementation forms, and advantages of the exemplary embodiments will become apparent from the embodiments described herein considered in conjunction with the accompanying drawings. It is to be understood, however, that the description and drawings are designed solely for purposes of illustration and not as a definition of the limits of the disclosed invention, for which reference should be made to the appended claims. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

### BRIEF DESCRIPTION OF THE DRAWINGS

In the following detailed portion of the present disclosure, the invention will be explained in more detail with reference to the example embodiments shown in the drawings, in which:
Figure 1 is a block diagram illustrating an exemplary antenna module incorporating aspects of the disclosed embodiments.
Figure 2 illustrates an assembly view of an exemplary antenna module incorporating aspects of the disclosed embodiments.
Figure 3 illustrates an exemplary housing for an antenna module incorporating aspects of the disclosed embodiments.
Figure 4 is a schematic diagram of an exemplary antenna assembly for an antenna module incorporating aspects of the disclosed embodiments.
Figure 5 is a schematic diagram illustrating surface currents for an exemplary antenna assembly incorporating aspects of the disclosed embodiments.
Figure 6 illustrates another example of an exemplary antenna assembly incorporating aspects of the disclosed embodiments.
Figure 7 illustrates an assembly diagram of another exemplary antenna module incorporating aspects of the disclosed embodiments.
Figure 8 is a schematic diagram illustrating feedlines for an exemplary antenna assembly incorporating aspects of the disclosed embodiments.
Figures 9 and 10 illustrate surface currents for the exemplary antenna assembly shown in Figure 8.
Figure 11 is a block diagram illustrating an exemplary antenna module incorporating aspects of the disclosed embodiments with an additional slot antenna.
Figure 12 illustrates an exemplary vehicle with an antenna module incorporating aspects of the disclosed embodiments mounted therein.

### DETAILED DESCRIPTION OF THE DISCLOSED EMBODIMENTS

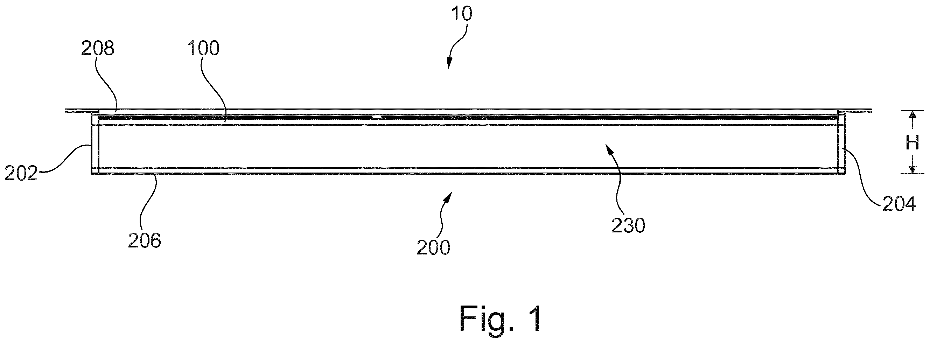

Referring to Figure 1 there can be seen an exemplary block diagram of an antenna module 10 incorporating aspects of the disclosed embodiments. The aspects of the disclosed embodiments are directed to providing a compact size MIMO antenna. The antenna module 10 of the disclosed embodiments finds application in next generation vehicle connectivity systems.

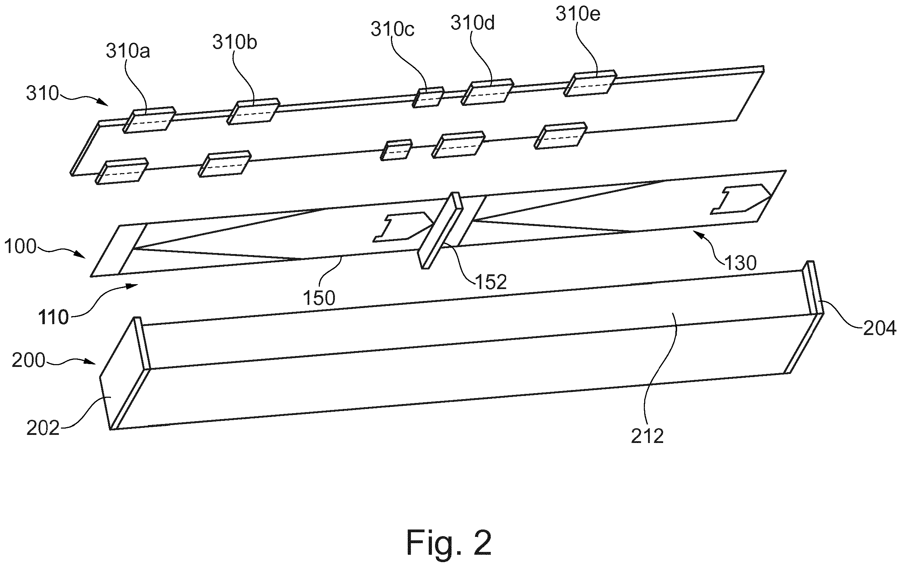

Referring to Figures 1 and 2, the aspects of the disclosed embodiments are directed to a MIMO antenna assembly 100 for an antenna module 10. In one embodiment, the antenna assembly 100 includes a planar dielectric member 150 and at least one MIMO antenna 110 formed on the surface of the planar dielectric member 150. The dielectric member 150 can comprise any suitable material for supporting an antenna. Examples of the dielectric member 150 can include for example, but are not limited to, printed circuit boards (PCB) or plastic. The antenna structures of the disclosed embodiments will generally be PCB based.

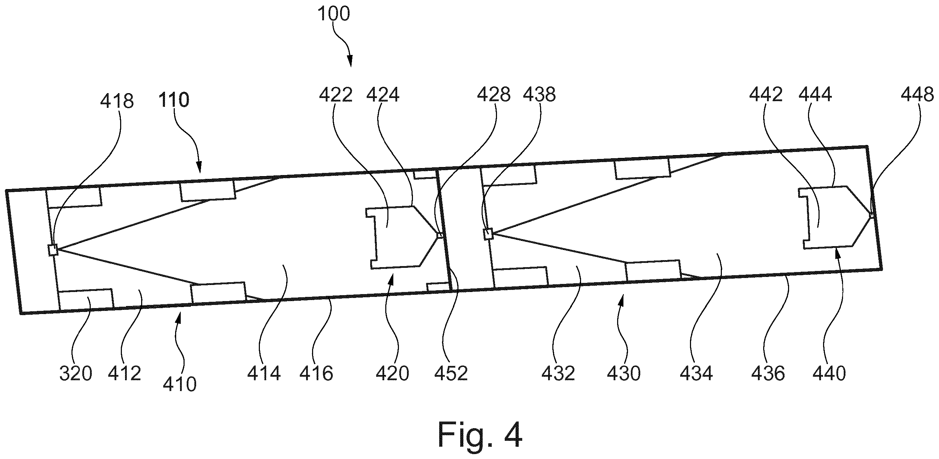

Referring to Figures 2 and 4, the at least one MIMO antenna 110 will include a slot antenna 410 and a monopole antenna 420. The slot antenna 410 is generally formed as first conductive pattern 412 on a surface of the planar dielectric member 150. The monopole antenna 420 is formed as a second conductive pattern 422 on the surface of the planar dielectric member 150. As is illustrated in Figure 4, the monopole antenna 420 is disposed in a slot portion 414 of the slot antenna 410.

Referring to Figures 1 to 3, the aspects of the disclosed embodiments provide an antenna module 10 that is generally configured to present a substantially flat form or profile. The antenna module 10 of the disclosed embodiments generally comprises a housing 200. As illustrated in Figures 1 and 2, the antenna assembly 100 is disposed with a cavity 230 of the housing 200, wherein the housing 200 is generally defined by the end portions or side members 202, 204, side members 212 and bottom member 206. The housing 200 will include two side members 212, one on each side, only one of which is illustrated. In one embodiment, the housing 200 can also include a top member or cover 208. The top cover 208 is generally configured to be removable so as to provide an opening and access to the cavity 230.

The sides 212 of the housing 200, only one side of which is illustrated, are configured to be electrically open. In one embodiment, the sides 212 comprises a dielectric material, such as plastic or rubber. The sides 212 are generally configured to provide protection from the environment and may also provide acoustic isolation.

In the example shown in Figure 1, which is a side, cross-sectional view of the antenna module 10, the cavity 230 is covered by the top or cover 208. In one embodiment, as illustrated in Figure 1, the outer edges or portions of the top cover 208 extend over the end portions or members 202, 204 of the housing 200. In this manner the end members 202, 204 are covered or overlapped by the cover 208. The antenna assembly 100 is generally disposed within the cavity 230, under the cover 208.

The cover 208 is generally configured to provide a water tight seal and sound isolation for the housing 200. In one embodiment, the top cover 208 comprises a dielectric material, such as plastic or rubber.

In one embodiment, the end members 202, 204 of the housing 200 are metallized, conductive members. The metallized conductive members 202, 204 can be configured as a metal outer shell for the housing 200. In one embodiment, the metallized conductive members 202, 204 comprise steel or aluminum, for example. The arrangement and configuration of the metallized members 202, 204, bottom 206 and cover 208 of the housing 200 are configured to provide water tightness, acoustic isolation and mechanical robustness for the housing 200.

In the example of Figure 2, the cover 208 generally comprises one or more fixtures or fastening members 310. For the purposes of the description herein, the cover 208 includes a plurality of fixtures 310, and are generally illustrated as fixtures 310a, 310b, 310c, 310d and 310d on one side of the cover 208. The other side or edge of the cover 208 can include a similar arrangement of fixtures 310. The plurality of fixtures 310 will generally be aligned along the opposing edges or side of the cover 208 and will be substantially symmetrically arranged. The fixtures 310 are generally configured to secure the cover 208 to the housing 200. The fixtures 310 can comprises a part of the cover 208 or a separate piece. Although the aspects of the disclosed embodiments are generally described herein with respect to the use of fixtures 310 to secure the cover 208 to the housing 200, the aspects of disclosed embodiments are not so limited. In alternate embodiments, the cover 208 can be secured to the housing 200 in any suitable manners. Some alternate mechanisms can include, but are not limited to snap fit attachments as well as epoxy or glue.

In one embodiment, the fixtures 310 comprise screw fixtures. For example, the fixture 310 can comprises a tab member that is secured to, or is formed as part of the cover 208. The tab member 312 can include one or more openings 314. For the purposes of the description herein, only one tab member 312 and openings 314 are highlighted. It will be understood that the housing 200 can include any number of fixtures 310, including tab member 312 and openings 314 depending upon the size of the housing 200 and cover 208.

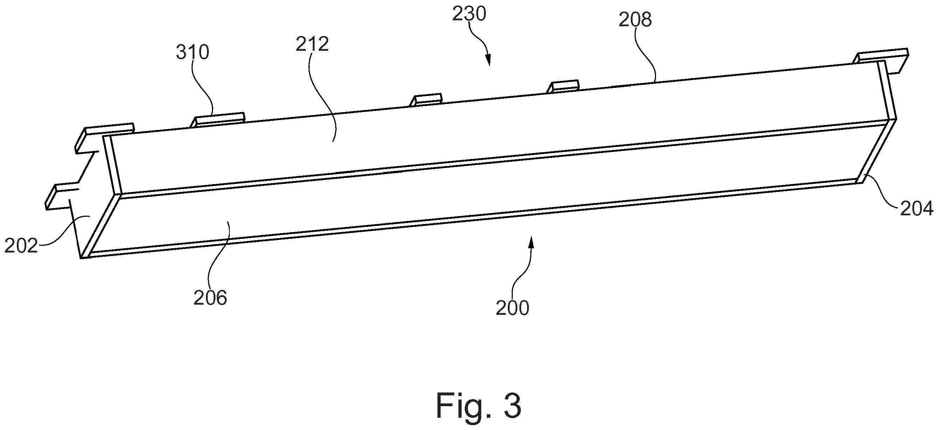

Screws or other types of fasteners can be used to secure the fixtures 310 to the housing 200. For example, screws or other type of plug fasteners can be inserted into the openings 314 to secure the cover 208 to the housing 200. The housing 200 can include corresponding apertures or screw holes that are configured to receive the screws or fasteners. Figure 3 illustrates an embodiment where the cover 208 is secured to the housing portion 200. As will be described further below, in one embodiment, the fixtures 310 can also be configured to connect the cover 208 and housing 200 to the body of a vehicle or other surface.

The dimensions of the antenna module 10 and housing 200 are generally defined by the particular application for the antenna assembly 100 and antenna module 10. For a vehicle application, the size of the housing 200 will be defined by the vehicle design and mechanical requirements. In one exemplary embodiment, a width of the antenna module 10 can be approximately 60 millimeters. An exemplary length of the antenna module 10 can be approximately 320 millimeters. A height H of the antenna module can be in the range of approximately 5 millimeters to and including approximately 50 millimeters. In one embodiment, the height H of the antenna module 10 illustrated in Figure 1 can be defined by the operating frequency range of the antenna module 10. In one embodiment, the dielectric member 150 can include a support member 152 at an approximate midportion of the dielectric member 150.

As illustrated in Figure 2, the MIMO antenna assembly 100 for antenna module 10 is disposed within the housing 200. The antenna assembly 100 of the disclosed embodiments is generally a PCB based antenna structure. This allows the antenna structures 110, 130 on the dielectric substrate 150 to have a substantially flat profile. In the embodiment where the antenna module 10 is installed in a vehicle, as will be described further below, the antenna assembly 100 and antenna structures 110, 130 therein are configured to be generally parallel to the vehicle surface. This enables the antenna module 10 to be substantially conformal to the vehicle surface and present as an unobtrusive structure with minimal airflow disruption or noise.

Figure 4 illustrates one embodiment of an antenna assembly 100 incorporating aspects of the disclosed embodiments. In this example, the antenna assembly 100 includes a pair of antenna structures 110, 130, generally described herein as a first MIMO antenna 110 and a second MIMO antenna 130. While only two MIMO antenna structures or assemblies 110, 130 are generally described herein, the antenna assembly 100 of the disclosed embodiments is not so limited and can include any suitable or desired number of MIMO antenna structures. As will be described further herein, the antenna assembly 100 of Figure 4 is generally configured as a 4 × 4 MIMO antenna structure. However, in one embodiment, the antenna assembly 100 could include a single MIMO antenna 110, where the antenna assembly 100 comprises a 2 × 2 MIMO antenna structure, for example. In alternative embodiments, the antenna assembly 100 can comprises any suitable number of MIMO antennas needed for the particular MIMO antenna structure, such as 8 × 8 MIMO and 16 × 16 MIMO.

Referring to Figure 4, in one embodiment, the MIMO antenna 110 generally comprises a slot antenna 410 and a monopole antenna 420. The slot antenna 410 is formed by a first conductive pattern 412 formed on a surface of the planar dielectric member 150. The slot antenna 410 includes a slot portion 414.

The monopole antenna 420 is formed as a second conductive pattern 422 on the surface of the planar dielectric member 150. The monopole antenna 420 is disposed in the slot portion 414 of the slot antenna 410.

In a manner similar to that described above with respect to MIMO antenna 110, the second MIMO antenna 130 generally comprises a slot antenna 430 and a monopole antenna 440, also referred to herein as the second slot antenna 430 and second monopole antenna 440. The slot antenna 430 is formed by a third conductive pattern 432 on the surface of the planar dielectric member 150. The slot antenna 430 includes a slot portion 434.

The monopole antenna 440 is formed as a fourth conductive pattern 442 on the surface of the planar dielectric member 150. The monopole antenna 440 is disposed in the slot portion 434 of the slot antenna 430.

In the example of Figure 4, the shape of the first slot antenna 410 and the second slot antenna 430 is tapered from the respective feed point 418, 438. The tapering can comprise one or more of exponential, linear or multi-step tapering. Tapering generally provides wide impedance matching in the range of 678 MHz to and including 5850 MHz, for example, for the slot antennas 410, 430. Although the slot antennas of the disclosed embodiments are described herein as having a tapered shape, the aspects of the disclosed embodiments are not so limited. The shape can be defined by the particular antenna application. For example, in one embodiment, the shape may be square, rectangular, or other suitable geometric shape.

As illustrated in Figure 4, the side or boundary portions of the slot antenna 410 form, or are formed by, a conductive perimeter member 416. The side or boundary portions of the slot antenna 430 form, or are formed by, a conductive perimeter member 436. In the embodiment where the antenna assembly 100 comprises the first MIMO antenna 110 and second MIMO antenna 130, the conductive perimeter member 416 and the conductive perimeter member 436 can be connected together, such as along conductive perimeter portion 452. The conductive perimeter members 416 and 436 form the boundaries for the slot portions 414, 434 of the respective slot antennas 410, 430. In one embodiment, the conductive perimeter members 416, 436 form or are formed by, respective metal conducting areas.

The monopole antennas 420, 440 are formed within the cavity by the conductive perimeters or sides 416, 436 of the slot antennas 410, 430, respectively. The conductive perimeter members 416, 436 can also form a ground for the respective monopole antennas 420, 440.

Since the monopole antennas 420, 440 are respectively disposed within the slot portions 414, 434 of the respective slot antennas 410, 430, extra space on the surface of the dielectric member 150 is not needed for the monopole antennas 420, 440. In one embodiment, the slot modes of the slot antennas 410, 430 are orthogonal to the monopole modes of the monopole antennas 420, 440. By utilizing orthogonal current modes, isolation of greater than negative or minus (-) 15dB can be achieved and the monopole antennas 420, 440 also operate within the same frequency band as the respective slot antenna 410, 430.

In one embodiment, the antenna assembly 100 can include fixation structures 320 that are configured to connect to, or mate with the fixtures 310 of the cover 208. The structures 320 can also be configured to connect to the matching circuits and soldering cables (pigtails) and RF connectors for electrically connecting the antenna structures 110, 130 with the corresponding transmitting and receiving units.

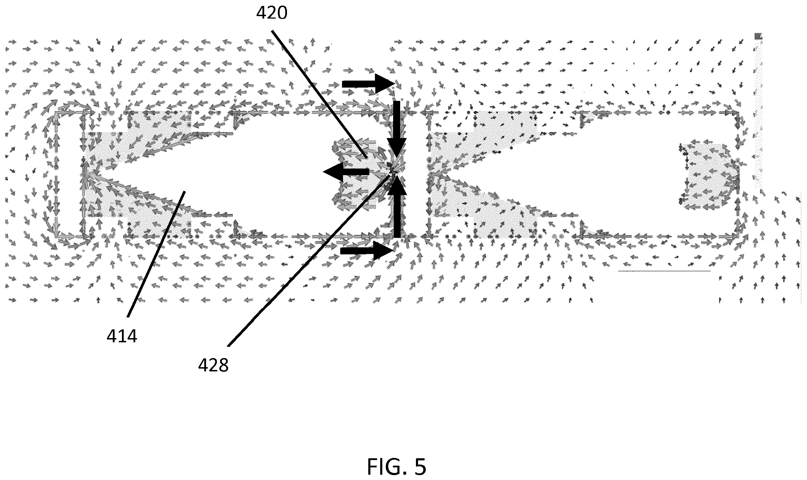

Referring also to Figure 5, monopole current modes generated by the feed point 428 of the monopole antenna 420 are illustrated. In this example, the surface current distributions at 1700 MHz are illustrated. Similar distributions can be realized with the monopole antenna 440.

In one embodiment, as shown in Figure 4, the monopole antenna 420 and the monopole antenna 440 have a tapered shaped. For example, the taper of the monopole antenna 420 runs from the feed point 428 to the edge 424. The tapering provides wide band impedance matching, from for example 1450 MHz to 5850 MHz for the monopole antenna 420. Monopole antenna 440 shown in Figure 4 also includes tapering from the feed point 448 to the edge 444. Although the monopole antennas of the disclosed embodiments are described herein as having a tapered shape, the aspects of the disclosed embodiments are not so limited. The shape can be defined by the particular antenna application. For example, in one embodiment, the shape may be square, rectangular, or other suitable geometric shape.

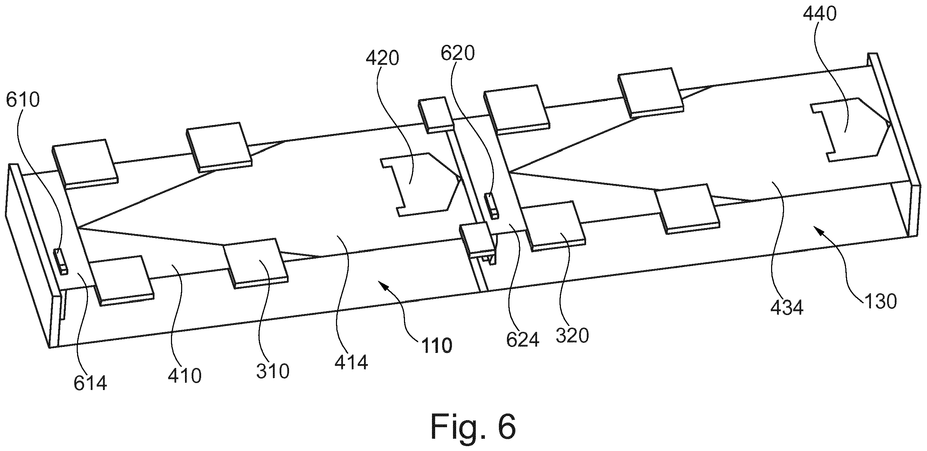

Figure 6 illustrates one example of an antenna assembly 110 incorporating aspects of the disclosed embodiments where an additional monopole antenna is disposed within the slot portion of the slot antenna. In the example of Figure 6, a monopole antenna 610 is disposed in the slot portion 614 of the MIMO antenna 110. Also in the example, a monopole antenna 620 is disposed in the slot portion 624 of the MIMO antenna 130. The additional monopole antennas 610, 620 are generally configured for operation in MIMO high frequency bands, such as in the range of approximately 4400 MHz to and including 5925 MHz. In one embodiment, the additional monopole antennas 610, 620 are disposed substantially perpendicularly to the dielectric member 150. Disposition of the additional monopole antenna 610, 620 substantially perpendicularly provides isolation of the additional monopole antenna to other planar systems. This can provide system capability in additional frequency bands. While the additional antenna 610, 620 are generally described herein with respect to monopole antennas, the aspects of the disclosed embodiments are not so limited. In alternative embodiments, other suitable antenna structures can include but are not limited to, for example, patch antennas, capacitive antennas or inductive loaded antennas. In one embodiment, the monopole antennas can be configured as inverted F antennas.

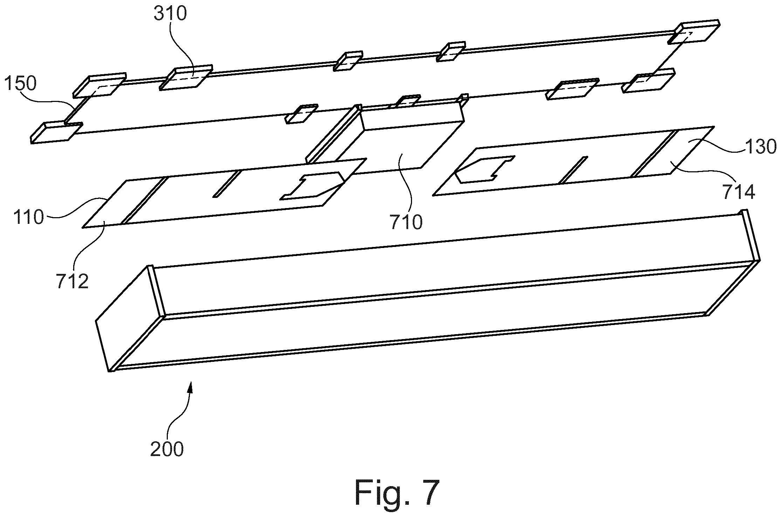

Referring to Figure 7, in one embodiment, the antenna assembly 100 includes a separate antenna element 710. The antenna element 710 is generally configured to be disposed between adjacent MIMO antennas 110, 130 and is configured for operation on frequency bands that are different from the MIMO antennas 110, 130. The positioning of the antenna element 710 between the adjacent MIMO antennas 110, 130 is configured to improve the antenna to antenna isolation.

In the example of Figure 7, the antenna element 710 physically separates the first MIMO antenna 110 and the second MIMO antenna 130 on the dielectric member 150. For example, as shown in Figure 7, the dielectric member 150 is separated into a first dielectric member 712 and a second dielectric member 714. In alternative embodiments, the positioning of the antenna element 710 between the adjacent MIMO antennas 110, 130 can be achieved in any suitable manner. For example, in one embodiment, the dielectric member 150 can include an opening that is suitably sized and configured to accommodate the antenna element 710.

In one embodiment, the antenna element 710 is disposed in an approximate center of the cavity 230 of the housing 200. The MIMO antennas 110, 130 are arranged at opposite sides of the cavity 230 in this embodiment to ensure the best possible isolation between the different antenna structures.

The antenna element 710 can comprise any suitable antenna element that is configured to operate on frequency bands different from the MIMO antennas 110, 130. For example, the antenna element 710 can comprises one or more of a satellite digital radio system (SDARS) antenna element or, a global positioning system (GNSS) antenna element. The GNSS antenna element can be configured for GPS, Galileo, GLONASS or Beidou.

In one embodiment, the antenna element 710 can include a SDARS antenna element integrated with the GNSS antenna element. This antenna element 710 is then allocated between the adjacent MIMO antennas 110, 130 within the cavity 230.

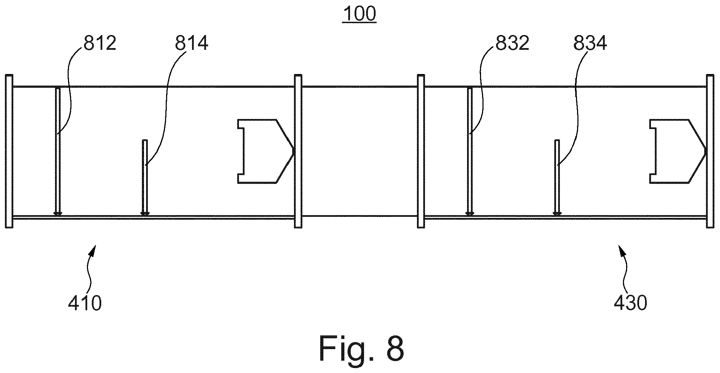

In one embodiment, referring to Figure 8, the antenna assembly 100 can also include additional feed lines. In the example of Figure 8, the slot antenna 410 includes feed lines 812, 814, while the slot antenna 430 includes feed lines 832, 834. In this example, the feedlines 812, 814 and 832, 834 are configured to resonate the respective slot antennas 410, 430 at multiple frequency bands.

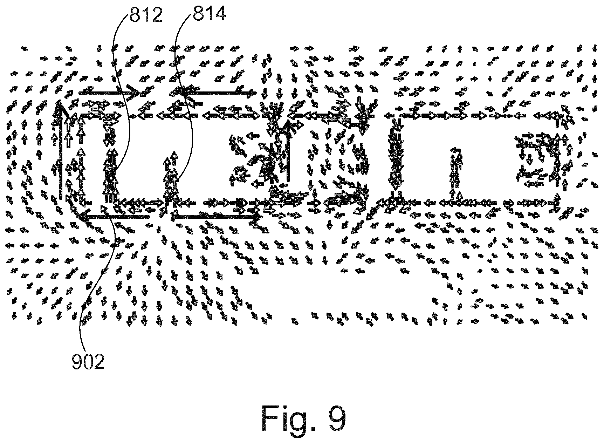

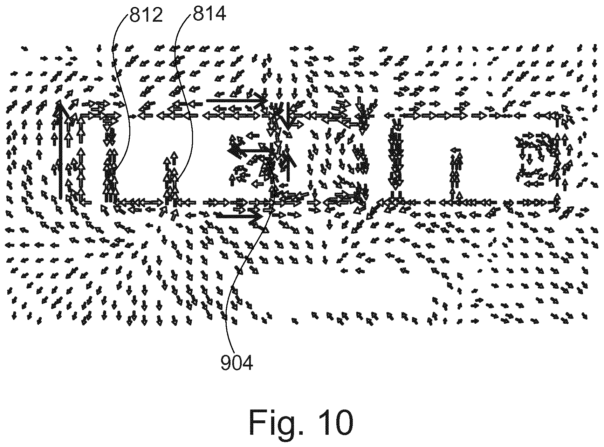

Figures 9 and 10 illustrates exemplary current loops 902, 904 for the antenna assembly 110 illustrated in Figure 8. In Figure 9, the high order current loops 902 at 1700 MHz are illustrated. In the example of Figure 10, the monopole current loops 904 at 1700 MHz are illustrated. As is illustrated in Figures 9 and 10, the current modes for the slot antenna 410 and slot antenna 430 are orthogonal. Thus, the isolation that can be achieved between slot antenna 410 and monopole antenna 420, and slot antenna 430 and monopole antenna 440 can be greater than approximately minus 15dB.

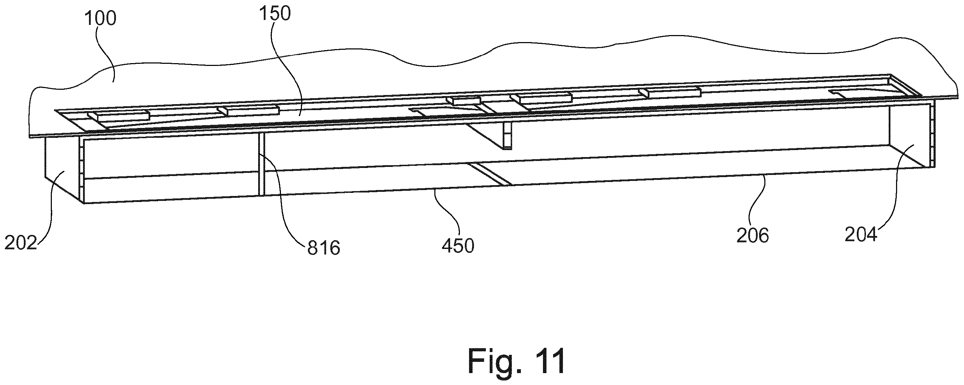

Figure 11 illustrates an antenna assembly 110 that includes at least one additional MIMO antenna structure, which in this example is a slot antenna 450. In this example, the slot antenna 450 is formed by the outer conductive structure of the MIMO antenna 110, including the metallized sides 202, 204 and bottom 206 of the housing 200. The feedline 816 for this slot antenna 450 is arranged substantially perpendicular to the dielectric member 150. The feedline 816 is configured to resonate the slot antenna 450 at the lower frequencies, such as the long term evolution (LTE) 3GPP FDD B31 frequency band or the frequency range of approximately 452.5 to and including 467.7 MHz.

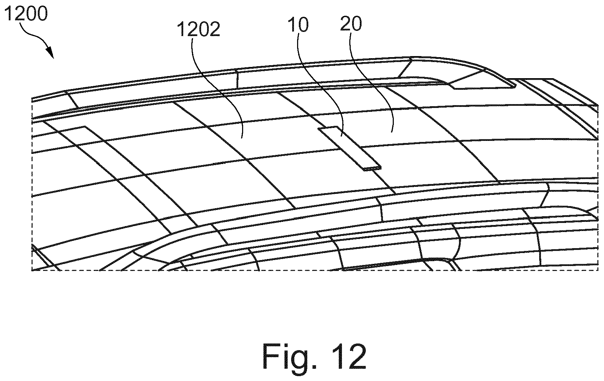

Figure 12 illustrates an exemplary application for the antenna module 10 of the disclosed embodiments. In this example, the antenna module 10 is mounted in or on a vehicle 1200. The antenna module 10 is disposed in a suitable opening or cavity in a surface member 1202 of the vehicle. In this example, the antenna module 10 is disposed in roof region of the vehicle, such as in the roof between a sunroof area and the rear window. In alternative embodiments, the antenna module 10 can be disposed under the roof or a trunk lid surface.

In one embodiment, the antenna assembly 100 includes a metal conducting member 20. The metal conducting member 20 can be connected to the slot antennas 410, 430. For example, the metal conducting member 20 could be connected to, or form, the conductive perimeter members 416 and 436 of the respective slot antennas 410, 430 illustrated in Figure 4. In the example of Figure 12, the vehicle surface member 1202 can be metal or otherwise conductive and can comprise the metal conducting area 20. Although the vehicle surface member 1202 is shown as being the metal conducting member 20, the aspects of the disclosed embodiments are not so limited. In alternate embodiments, any suitable conductive member, such as a metal sheet, can service as the metal conducting member 20. The metal conducting member 20, or conductive vehicle surface member 1202 in the example of Figure 12, can serve as a counterweight or ground plane for the antenna function of the antenna module 10.

In one embodiment, the fixtures 310 can be used to connect the conductive vehicle surface member 1202 to the slot antennas 410, 430. This allows the conducting vehicle surface member 1202 to serve as the counterweight/ground plane to the antenna function. In this embodiment, the metallic or conductive vehicle surface 1202 is part of the slot antennas 410, 430 and enables a high efficiency, very wide band low-frequency main and MIMO antenna.

The antenna module 10 is configured to be conformal with the vehicle surface member 1202. In one embodiment, the antenna module 10 has a generally flat profile that is configured to be arranged in a conformal or flat manner with respective to the vehicle surface 1202. In this manner, the antenna module 10 presents in an aesthetically pleasing manner and does not provide any obstruction that would generate wind or air flow noise when the vehicle is in motion.

The aspects of the disclosed embodiments provide an antenna assembly with a MIMO antenna that includes monopole antennas within the slot antenna. One or more monopole antennas can be disposed within the slot antenna. In this manner, the one or more monopole antennas do not need to occupy additional space other than the area of the slot antenna and the monopole antennas can be configured to operate in the same frequency bands as the slot antennas. MIMO 4 × 4 is fully supported with simultaneous multiband operation of at least two antennas covering each frequency band.

Isolation of at least minus 15 dB between antennas can be realized due to the orthogonal current modes of the slot antennas and the monopole antennas. Thus, as an example, two slot antennas can include at least two monopole antennas in the same volume, and achieve 4 × 4 MIMO performance.

The antenna module of the disclosed embodiments is configured to provide at least 4 × 4 MIMO for cellular mid and high bands. For low bands, the antenna module can provide 2 × 2 MIMO. The antenna module of the disclosed embodiments and provide WiFi 802.11ac, 4 × 4 MIMO connectivity with external networks and for the car interior WiFi. The antenna module is also configured to operate in the range of 698 MHz to 6 GHZ, 3.5 GHz bands, 4.2 GHz bands, as well as 5.2 to 5.8 GHz.

Thus, while there have been shown, described and pointed out, fundamental novel features of the invention as applied to the exemplary embodiments thereof, it will be understood that the scope of the invention is limited only as indicated by the scope of the claims appended hereto.

## Claims

1. A multiple input-multiple output, MIMO, antenna assembly (100) for an antenna module (10), the antenna assembly (100) comprising:
a planar dielectric member (150); and
at least one MIMO antenna (110) formed on a surface of the planar dielectric member (150), wherein the at least one MIMO antenna (110) comprises:
a slot antenna (410), the slot antenna (410) being formed as a first conductive pattern (412) on a surface of the planar dielectric member (150); and
a monopole antenna (420), the monopole antenna (420) being formed as a second conductive pattern (422) on the surface of the planar dielectric member (150) and being disposed in a slot portion (414) of the slot antenna (410),
wherein a shape of the slot portion (414) of the slot antenna (410) is tapered.

2. The antenna assembly (100) according to claim 1, wherein the slot antenna (410) comprises a conductive perimeter member (416), the conductive perimeter member (416) forming a ground for the monopole antenna (420).

3. The antenna assembly (100) according to any one of the preceding claims, the antenna assembly configured such that surface currents of the slot antenna (410) in a slot mode are substantially orthogonal to surface currents of the monopole antenna (420) in a monopole mode of the monopole antenna (420).

4. The antenna assembly (100) according to any one of the preceding claims, wherein a shape of the monopole antenna (420) is tapered.

5. The antenna assembly (100) according to any one of the preceding claims, wherein the monopole antenna (420) is configured to be substantially planar with the planar dielectric member (150).

6. The antenna assembly (100) according to any of the preceding claims, wherein the slot antenna (410) further comprises at least one feedline (812, 814), the at least one feedline (812, 814) configured to resonate the slot antenna (410) at multiple frequency bands.

7. The antenna assembly (100) according to any one of the preceding claims, wherein the antenna assembly (100) comprises at least one other MIMO antenna (130) formed on the surface of the planar dielectric member (150), wherein the at least one other MIMO antenna (130) comprises:
a slot antenna (430), the slot antenna (430) being formed as a third conductive pattern (432) on a surface of the planar dielectric member (150); and
a monopole antenna (440), the monopole antenna (440) being formed as a fourth conductive pattern (442) on the surface of the planar dielectric member (150) and being disposed in a slot portion (434) of the slot antenna (430).

8. The antenna assembly (100) according to claim 7, further comprising a separation element (710) disposed between the at least one MIMO antenna (110) and the at least one other MIMO antenna (130), the separation element (710) comprising an additional antenna module configured for operation on frequency bands different from the at least one MIMO antenna (110) and the at least one other MIMO antenna (130).

9. The antenna assembly (100) according to any of the preceding claims, further comprising at least one additional monopole antenna (610, 620), the at least one additional monopole antenna (610, 620) being formed as at least one conductive pattern on the surface of the planar dielectric member (150), and being disposed substantially perpendicularly to the planar dielectric member (150).

10. An antenna module (10), the antenna module (10) comprising an antenna assembly (100) according to any one of the preceding claims, wherein the antenna module (10) further comprises:
an enclosure (200) defining a cavity (230), the enclosure (200) comprising a top member (208) and side members (212), the top member (208) and the side members (212) comprising a dielectric material, the enclosure (200) further comprising a first end member (202), a second end member (204) and a bottom member (206), the first end member (202), the second end member (204) and bottom member (206) comprising conductive surfaces; and wherein the antenna assembly (100) is located in the cavity (230).

11. The antenna module (10) according to claim 10, wherein the conductive first end member (202), the conductive second end member (204) and the conductive bottom member (206) are configured to form at least one additional MIMO antenna assembly (430) according to any of claims 1 to 9.

12. A vehicle (1200) comprising an antenna module (10) according to claim 10 or 11, wherein a conductive surface member (1202) of the vehicle (1200) is configured to be electrically connected to the slot antenna (410).

13. The vehicle (1200) according to claim 12, wherein the top member (210) of the antenna module (10) is substantially conformal with the conductive surface member (1202) of the vehicle (1200).

14. The vehicle (1200) according to claim 12 or 13 when depending on claim 11, wherein a feedline (816) for a slot antenna of the at least one additional MIMO antenna assembly (430) is configured to be substantially perpendicular to the conductive surface member (1202) of the vehicle (1200).

## Patentansprüche

1. Multiple-Input-Multiple-Output(MIMO)-Antennenanordnung (100) für ein Antennenmodul (10), die Antennenanordnung (100) umfassend:
ein planares dielektrisches Element (150); und
mindestens eine MIMO-Antenne (110), die auf einer Oberfläche des planaren dielektrischen Elements (150) ausgebildet ist, wobei die mindestens eine MIMO-Antenne (110) umfasst:
eine Schlitzantenne (410), wobei die Schlitzantenne (410) als ein erstes leitfähiges Muster (412) auf einer Oberfläche des planaren dielektrischen Elements (150) ausgebildet ist; und
eine Monopolantenne (420), wobei die Monopolantenne (420) als ein zweites leitfähiges Muster (422) auf der Oberfläche des planaren dielektrischen Elements (150) ausgebildet ist und in einem Schlitzabschnitt (414) der Schlitzantenne (410) eingerichtet ist,
wobei eine Form des Schlitzabschnitts (414) der Schlitzantenne (410) verjüngt ist.

2. Antennenanordnung (100) nach Anspruch 1, wobei die Schlitzantenne (410) ein leitfähiges Umfangselement (416) umfasst, wobei das leitfähige Umfangselement (416) eine Masse für die Monopolantenne (420) ausbildet.

3. Antennenanordnung (100) nach einem der vorstehenden Ansprüche, wobei die Antennenanordnung derart konfiguriert ist, dass Oberflächenströme der Schlitzantenne (410) in einem Schlitzmodus im Wesentlichen orthogonal zu Oberflächenströmen der Monopolantenne (420) in einem Monopolmodus der Monopolantenne (420) sind.

4. Antennenanordnung (100) nach einem der vorstehenden Ansprüche, wobei eine Form der Monopolantenne (420) verjüngt ist.

5. Antennenanordnung (100) nach einem der vorstehenden Ansprüche, wobei die Monopolantenne (420) konfiguriert ist, um im Wesentlichen planar mit dem planaren dielektrischen Element (150) zu sein.

6. Antennenanordnung (100) nach einem der vorstehenden Ansprüche, wobei die Schlitzantenne (410) ferner mindestens eine Zuleitung (812, 814) umfasst, wobei die mindestens eine Zuleitung (812, 814) konfiguriert ist, um die Schlitzantenne (410) bei mehreren Frequenzbändern zu resonieren.

7. Antennenanordnung (100) nach einem der vorstehenden Ansprüche, wobei die Antennenanordnung (100) mindestens eine andere MIMO-Antenne (130) umfasst, die auf der Oberfläche des planaren dielektrischen Elements (150) ausgebildet ist, wobei die mindestens eine andere MIMO-Antenne (130) umfasst:
eine Schlitzantenne (430), wobei die Schlitzantenne (430) als ein drittes leitfähiges Muster (432) auf einer Oberfläche des planaren dielektrischen Elements (150) ausgebildet ist; und
eine Monopolantenne (440), wobei die Monopolantenne (440) als ein viertes leitfähiges Muster (442) auf der Oberfläche des planaren dielektrischen Elements (150) ausgebildet ist und in einem Schlitzabschnitt (434) der Schlitzantenne (430) eingerichtet ist.

8. Antennenanordnung (100) nach Anspruch 7, ferner umfassend ein Trennelement (710), das zwischen der mindestens einen MIMO-Antenne (110) und der mindestens einen anderen MIMO-Antenne (130) eingerichtet ist, das Trennelement (710) umfassend ein zusätzliches Antennenmodul, das für einen Betrieb in Frequenzbändern konfiguriert ist, die sich von der mindestens einen MIMO Antenne (110) und der mindestens einen anderen MIMO-Antenne (130) unterscheiden.

9. Antennenanordnung (100) nach einem der vorstehenden Ansprüche, ferner umfassend mindestens eine zusätzliche Monopolantenne (610, 620), wobei die mindestens eine zusätzliche Monopolantenne (610, 620) als mindestens ein leitfähiges Muster auf der Oberfläche des planaren dielektrischen Elements (150) ausgebildet ist und im Wesentlichen senkrecht zu dem planaren dielektrischen Element (150) eingerichtet ist.

10. Antennenmodul (10), das Antennenmodul (10) umfassend eine Antennenanordnung (100) nach einem der vorstehenden Ansprüche, wobei das Antennenmodul (10) ferner umfasst:
ein Gehäuse (200), das einen Hohlraum (230) definiert, das Gehäuse (200) umfassend ein oberes Element (208) und Seitenelemente (212), das obere Element (208) und die Seitenelemente (212) umfassend ein dielektrisches Material, das Gehäuse (200) ferner umfassend ein erstes Endelement (202), ein zweites Endelement (204) und ein Bodenelement (206), das erste Endelement (202), das zweite Endelement (204) und das Bodenelement (206) umfassend leitfähige Oberflächen; und wobei sich die Antennenanordnung (100) in dem Hohlraum (230) befindet.

11. Antennenmodul (10) nach Anspruch 10, wobei das leitfähige erste Endelement (202), das leitfähige zweite Endelement (204) und das leitfähige Bodenelement (206) konfiguriert sind, um mindestens eine zusätzliche MIMO-Antennenanordnung (430) nach einem der Ansprüche 1 bis 9 auszubilden.

12. Fahrzeug (1200), umfassend ein Antennenmodul (10) nach Anspruch 10 oder 11, wobei ein leitfähiges Oberflächenelement (1202) des Fahrzeugs (1200) konfiguriert ist, um mit der Schlitzantenne (410) elektrisch verbunden zu sein.

13. Fahrzeug (1200) nach Anspruch 12, wobei das obere Element (210) des Antennenmoduls (10) im Wesentlichen mit dem leitfähigen Oberflächenelement (1202) des Fahrzeugs (1200) winkeltreu ist.

14. Fahrzeug (1200) nach Anspruch 12 oder 13, wenn abhängig von Anspruch 11, wobei eine Zuleitung (816) für eine Schlitzantenne der mindestens einen zusätzlichen MIMO-Antennenanordnung (430) konfiguriert ist, um im Wesentlichen senkrecht zu dem leitfähigen Oberflächenelement (1202) des Fahrzeugs (1200) zu sein.

## Revendications

1. Ensemble antenne (100) à entrées multiples et sorties multiples, MIMO, pour un module d'antenne (10), l'ensemble antenne (100) comprenant :
un élément diélectrique plan (150) ; et
au moins une antenne MIMO (110) formée sur une surface de l'élément diélectrique plan (150), l'au moins une antenne MIMO (110) comprenant :
une antenne à fente (410), l'antenne à fente (410) étant formée sous la forme d'un premier motif conducteur (412) sur une surface de l'élément diélectrique plan (150) ; et
une antenne unipolaire (420), l'antenne unipolaire (420) étant formée comme un deuxième motif conducteur (422) sur la surface de l'élément diélectrique plan (150) et étant disposée dans une partie à fente (414) de l'antenne à fente (410),
une forme de la partie à fente (414) de l'antenne à fente (410) étant effilée.

2. Ensemble antenne (100) selon la revendication 1, dans lequel l'antenne à fente (410) comprend un élément périmétrique conducteur (416), l'élément périmétrique conducteur (416) formant une masse pour l'antenne unipolaire (420).

3. Ensemble antenne (100) selon l'une quelconque des revendications précédentes, l'ensemble antenne étant configuré de telle sorte que les courants de surface de l'antenne à fente (410) dans un mode à fente sont sensiblement orthogonaux aux courants de surface de l'antenne unipolaire (420) dans un mode de monopôle de l'antenne unipolaire (420).

4. Ensemble antenne (100) selon l'une quelconque des revendications précédentes, dans lequel une forme de l'antenne unipolaire (420) est effilée.

5. Ensemble antenne (100) selon l'une quelconque des revendications précédentes, dans lequel l'antenne unipolaire (420) est configurée pour être sensiblement plane avec l'élément diélectrique plan (150).

6. Ensemble antenne (100) selon l'une quelconque des revendications précédentes, dans lequel l'antenne à fente (410) comprend en outre au moins une ligne d'alimentation (812, 814), l'au moins une ligne d'alimentation (812, 814) étant configurée pour faire résonner l'antenne à fente (410) sur plusieurs bandes de fréquences.

7. Ensemble antenne (100) selon l'une quelconque des revendications précédentes, dans lequel l'ensemble antenne (100) comprend au moins une autre antenne MIMO (130) formée sur la surface de l'élément diélectrique plan (150), l'au moins une autre antenne MIMO (130) comprenant :
une antenne à fente (430), l'antenne à fente (430) étant formée sous la forme d'un troisième motif conducteur (432) sur une surface de l'élément diélectrique plan (150) ; et
une antenne unipolaire (440), l'antenne unipolaire (440) étant formée comme un quatrième motif conducteur (442) sur la surface de l'élément diélectrique plan (150) et étant disposée dans une partie à fente (434) de l'antenne à fente (430).

8. Ensemble antenne (100) selon la revendication 7, comprenant en outre un élément de séparation (710) disposé entre l'au moins une antenne MIMO (110) et l'au moins une autre antenne MIMO (130), l'élément de séparation (710) comprenant un module d'antenne supplémentaire configuré pour fonctionner sur des bandes de fréquences différentes de l'au moins une antenne MIMO (110) et de l'au moins une autre antenne MIMO (130).

9. Ensemble antenne (100) selon l'une quelconque des revendications précédentes, comprenant en outre au moins une antenne unipolaire supplémentaire (610, 620), l'au moins une antenne unipolaire supplémentaire (610, 620) étant formée comme au moins un motif conducteur sur la surface de l'élément diélectrique plan (150) et étant disposée sensiblement perpendiculairement à l'élément diélectrique plan (150).

10. Module d'antenne (10), le module d'antenne (10) comprenant un ensemble antenne (100) selon l'une quelconque des revendications précédentes, dans lequel le module d'antenne (10) comprend en outre :
une enceinte (200) définissant une cavité (230), l'enceinte (200) comprenant un élément supérieur (208) et des éléments latéraux (212), l'élément supérieur (208) et les éléments latéraux (212) comprenant un matériau diélectrique, l'enceinte (200) comprenant en outre un premier élément d'extrémité (202), un second élément d'extrémité (204) et un élément inférieur (206), le premier élément d'extrémité (202), le second élément d'extrémité (204) et un élément inférieur (206) comprenant des surfaces conductrices ; et l'ensemble antenne (100) étant situé dans la cavité (230).

11. Module d'antenne (10) selon la revendication 10, dans lequel le premier élément d'extrémité conducteur (202), le second élément d'extrémité conducteur (204) et l'élément inférieur conducteur (206) sont configurés pour former au moins un ensemble antenne MIMO supplémentaire (430) selon l'un des revendications 1 à 9.

12. Véhicule (1200) comprenant un module d'antenne (10) selon la revendication 10 ou 11, dans lequel un élément de surface conducteur (1202) du véhicule (1200) est configuré pour être connecté électriquement à l'antenne à fente (410).

13. Véhicule (1200) selon la revendication 12, dans lequel l'élément supérieur (210) du module d'antenne (10) est sensiblement conforme à l'élément de surface conductrice (1202) du véhicule (1200).

14. Véhicule (1200) selon la revendication 12 ou 13 lorsqu'elle dépend de la revendication 11, dans lequel une ligne d'alimentation (816) pour une antenne à fente de l'au moins un ensemble antenne MIMO supplémentaire (430) configuré pour être sensiblement perpendiculaire à l'élément de surface conducteur (1202) du véhicule (1200).
